# EUROPEAN PATENT SPECIFICATION

(11) **EP 2 493 637 B1**
(45) Date of publication and mention of the grant of the patent: **11.12.2013**
(21) Application number: 10770818.2
(22) Date of filing: 26.10.2010
(51) Int. Cl.: B21C 37/08, B21C 37/09, B21C 37/15

(54) **APPARATUS FOR MANUFACTURING A MULTILAYER TUBE FOR THE HYDRAULIC CONNECTION AND WIRING OF SOLAR PANELS**
VORRICHTUNG ZUR HERSTELLUNG EINES MEHRLAGIGEN ROHRS FÜR DEN HYDRAULISCHEN ANSCHLUSS UND DIE VERDRAHTUNG VON PV-MODULEN
DISPOSITIF POUR LA FABRICATION D'UN TUBE MULTICOUCHE POUR LE RACCORDEMENT HYDRAULIQUE ET LE CÂBLAGE DE PANNEAUX SOLAIRES

(30) Priority: 28.10.2009 IT PD20090314
(43) Date of publication of application: 05.09.2012
(73) Proprietor: Everlux S.r.l., 35138 Padova (IT)
(72) Inventor: TOGNON, Francesco, I-35129 Padova (IT)
(74) Representative: Modiano, Micaela Nadia
(86) International application number: PCT/EP2010/066125
(87) International publication number: WO 2011/051263

(56) References cited:
- DE-A1- 3 023 214
- DE-C1- 10 007 496
- DE-U1- 20 020 563
- US-A1- 2005 100 728

## Description

### Technical field

The present invention relates to an apparatus for manufacturing a multilayer tube for the hydraulic connection and wiring of solar panels.

### Background Art

Currently, in order to install a solar panel of the thermal type, i.e., dedicated to the heating of a heat transfer fluid that is then designed to heat water for example for a home, one proceeds, after laying the panels, with the provision of the hydraulic and electrical connections.

The one or more fitted solar panels must be reached by a supply duct for the water to be heated and by a return duct for such water heated by passing through the one or more panels and, in the case for example of solar power systems with forced circulation, by an electrical connection for a probe for detecting the temperature of the water at the panel manifolds.

Such a complex installation is costly both in terms of time, since each duct and the wiring cable each require a dedicated path with a dedicated seat or chase or in any case must be laid each independently of the other, and in terms of space occupation, since according to currently applicable statutory provisions each duct for heat transfer fluids must be insulated thermally with layers of insulation which, in order to ensure the required performance, cause the individual duct to produce a diametrical space occupation of more than six centimeters.

In order to obviate the cited drawbacks of the background art, this same Applicant has devised a multilayer tube for the hydraulic connection and wiring of solar panels, which comprises
- at least two tubes, one for supply and one for return, for a heat transfer fluid designed to circulate in at least one hydraulic panel with which the multilayer tube is associated, such tube being arranged along parallel paths,
- at least one thermal insulation layer based on Aerogel, arranged so as to wrap around each tube,
- a protection and containment sheath, arranged so as to surround all of such tubes with an Aerogel insulation layer, such sheath being shaped so as to form a longitudinal containment channel for at least one electrical wiring cable.

Such a multilayer tube allows to connect hydraulically one or more solar panels quickly and with very small space occupation, far lower than the space occupation required by known means.

Further, such multilayer tube is in compliance with statutory provisions, and in terms of performance and efficiency is not inferior to currently known thermally insulated tubes. Background art can be found in DE-C-100 07 496, DE-A-30 23 214 and DE-U-200 20 563.

### Disclosure of the Invention

The aim of the present invention is to provide an apparatus for manufacturing a multilayer tube for the hydraulic connection and wiring of solar panels as described above.

Within this aim, an object of the invention is to provide an apparatus that can be managed easily with a small workforce.

Another object of the invention is to provide an apparatus that is flexible and easily adaptable to the production requirements of the user.

Another object of the invention is to propose an apparatus for manufacturing a multilayer tube for the hydraulic connection and wiring of solar panels that can be manufactured with known technologies.

This aim, as well as these and other objects that will become better apparent hereinafter, are achieved by an apparatus for manufacturing a multilayer tube for the hydraulic connection and wiring of solar panels, characterized in that it comprises
- means for covering at least one flexible tube with at least one tape of thermally insulating material;
- means for tying said tape made of thermally insulating material wrapped around the corresponding flexible tube;
- means for covering two flexible tubes, which are already covered with said insulating tape and are arranged mutually side-by-side and parallel, with a protection and containment sheath,
- means for the longitudinal closure of said sheath.

### Brief description of the drawings

Further characteristics and advantages of the invention will become better apparent from the following detailed description of two preferred but not exclusive embodiments of the apparatus according to the invention, illustrated by way of non-limiting example in the accompanying drawings, wherein:
Figure 1 is a schematic plan view of an apparatus according to the invention in its first embodiment;

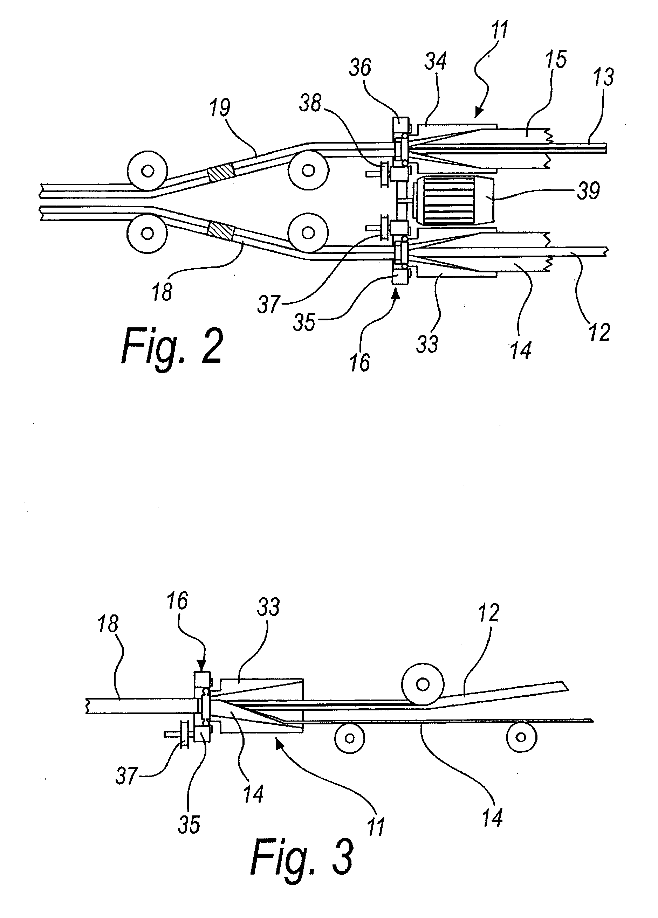

Figure 2 is a schematic top view of a first part of the apparatus according to the invention;
Figure 3 is a schematic side view of the first part of the apparatus of Figure 2;
Figure 4 is a schematic top view of a second part of the apparatus according to the invention;
Figure 5 is a schematic side view of the second part of the apparatus of Figure 4;
Figure 6 is a transverse sectional view of a detail of the second part of the apparatus shown in Figures 4 to 6;
Figure 7 is a schematic side view of a third part of the apparatus according to the invention;
Figure 8 is a front view of the third part of the apparatus of Figure 7;
Figure 9 is a view of a detail of Figure 8;
Figure 10 is a top view of the third part shown schematically in Figure 7;
Figure 11 is a schematic side view of the first part of the apparatus according to the invention in a second embodiment thereof;
Figure 12 is a front view of a detail of the first part of the apparatus in its second embodiment of Figure 11;
Figure 13 is a schematic top view of a portion of the apparatus according to the invention in its second embodiment.

### Ways of carrying out the Invention

With reference to the figures, an apparatus for manufacturing a multilayer tube for the hydraulic connection and wiring of solar panels according to the invention is generally designated by the reference numeral 10 in its first embodiment.

The apparatus 10 comprises:
- means 11 for covering two flexible tubes 12 and 13 each with a tape, 14 and 15 respectively, made of thermally insulating material;
- means 16 for tying such tape made of thermally insulating material wrapped around the corresponding flexible tube;
- means 17 for covering the two tubes covered with the insulating tape 14 and 15, such covered tubes being designated by the reference numerals 18 and 19 and being arranged mutually side-by-side and parallel, with a protection and containment sheath 20,
- means 21 for the longitudinal closure of the sheath 20 on the covered tubes 18 and 19.

Downstream of the means 21 for the longitudinal closure of the sheath there are means 22 for the advancement of the finished multilayer tube 23, which are followed by coiling means 24.

The apparatus 10 also comprises means 25 for cutting into tapes 26 of preset width thermally insulating material in roll form 27.

The material in roll form 27 is Aerogel.

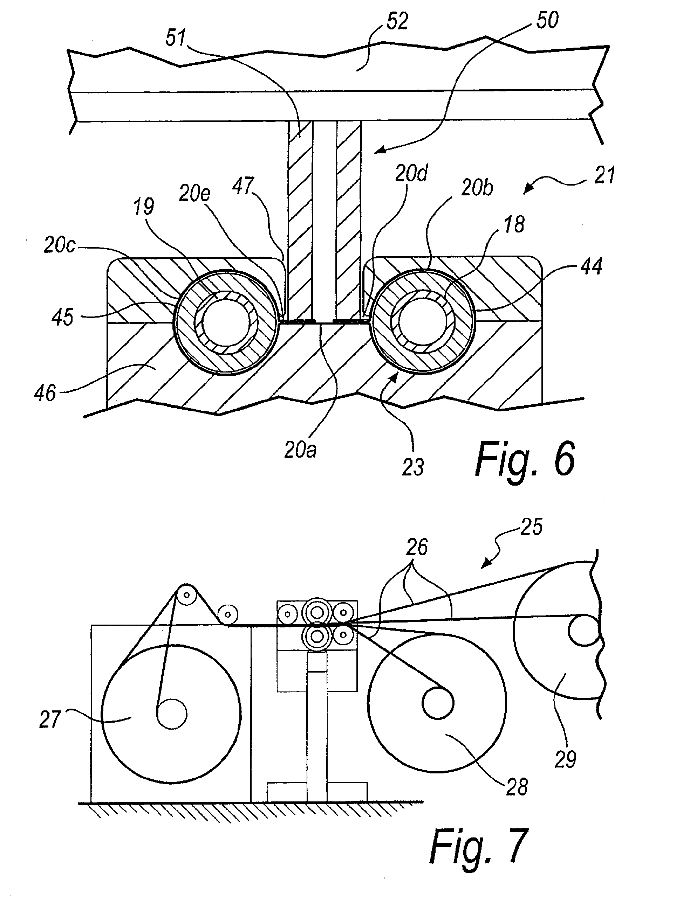

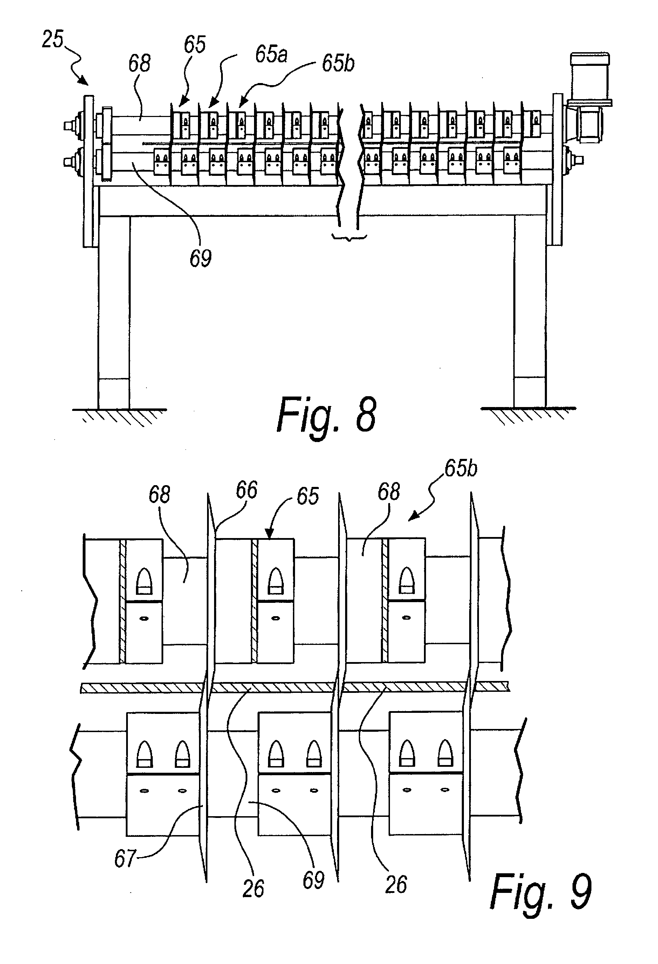

The means 11 for covering the two flexible tubes 12 and 13 receive the tapes 14 and 15 from corresponding rolls, for example 28 and 29, which are provided by way of the cutting means 25 of the Aerogel shown in Figures 7 to 10.

The flexible tubes 12 and 13 likewise arrive from corresponding spools 30 and 31.

The flexible tubes 12 and 13 are for example corrugated metallic tubes.

The means 11 for covering the two tubes 12 and 13 comprise two conical inlets 33 and 34, which are contoured to receive the tape 14 or 15 spread flat and to fold it during its advancement so as to wrap completely around the respective tube 12 or 13.

The tubes 12 and 13 wrapped in the respective tapes of Aerogel 14 and 15 exit from the conical inlets 33 and 34 in order to pass through the tying means 16, which are constituted for example by corresponding stranding devices 35 and 36, of a per se known type, each with one, two or four auxiliary strand carrying spools 37 and 38.

Both stranding devices 35 and 36 are actuated by a single electric motor 39, a sprocket which is keyed on the shaft of the motor 39, which acts on corresponding external sets of teeth of the rings that support the respective stranding devices.

The covered tubes 18 and 19 reach the means 17 for covering them with a protection and containment sheath 20 and are arranged mutually side-by-side and parallel.

At least one electrical cable is closed together with the two covered tubes 18 and 19 by the sheath 20 to the side of one of the two covered tubes.

The covering means 17 comprise an inlet 40, which is designed to arrange a central region 20a of the tape of sheath 20 under the two tubes 18 and 19, while the lateral flaps 20b and 20c are raised, to be then folded, by a subsequent passage element 42 provided with two conical channels, in order to wrap around each one of the two tubes 18 and 19, until the edges 20d and 20e of the flaps are moved into contact with the upper face of the central region 20a, as shown in Figure 6.

The means 21 for the longitudinal closure of the sheath 20 on the covered pipes 18 and 19 are shown schematically in cross-section in Figure 6; the means 21 comprise a body 46 inside which two tubular channels 44 and 45 are formed for the passage of the covered tubes 18 and 19 wrapped in the sheath 20, and between the tubular channels 44 and 45 there is an open channel 47, by means of which the edges 20d and 20e of the sheath 20, which are superimposed on the central region 20a of the sheath 20, can be accessed from above by a heat-sealing device 50, which is designed to heat-seal the flaps 20d and 20e to the central region 20a of the sheath.

Such a heat-sealing device 50 is to be understood as being of a per se known type, for example having a hot presser 51 moved by a press 52.

The means 22 for the advancement of the finished multilayer tube 23 are of the stepwise type.

The stepwise advancement means 22 comprise locking jaws 54 designed to grip the finished multilayer tube 23 to then perform a translational motion on rails 56 for the advancement of the finished multilayer tube by actuators 55.

The translational motion of the jaws 54 is synchronized with the movements of the press 52, so that the advancement of the finished multilayer tube 23 occurs when the presser 51 is lifted.

Downstream of the advancement means 22 there are the coiling means 24, which comprise, in addition to a motorized reel 58 onto which the multilayer tube 23 is to be wound, means 60 for diverting the multilayer tube 23 which are adapted, to direct the multilayer tube 23 so as to optimize winding onto the reel 58.

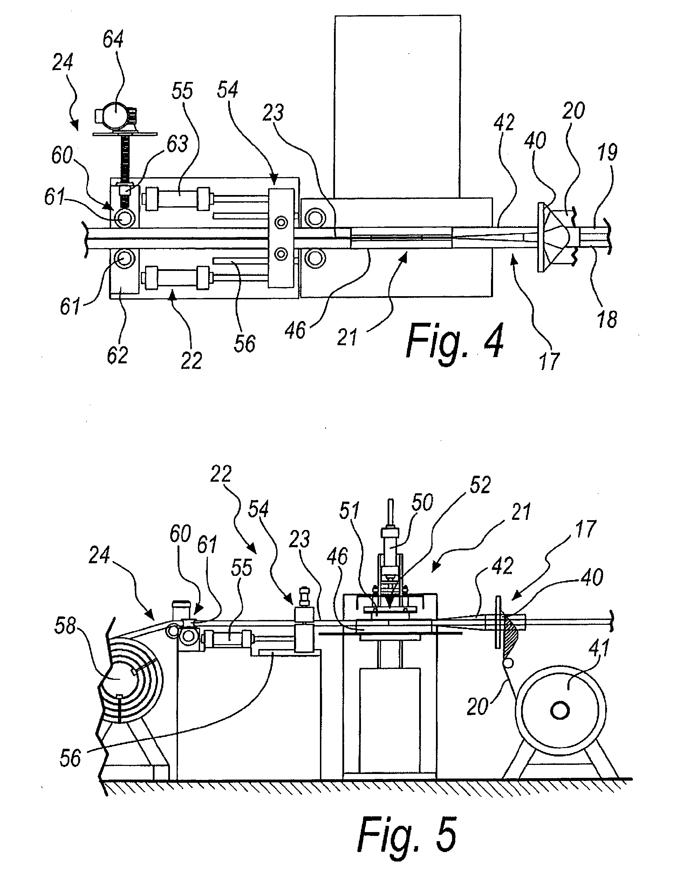

The diverting means 60 comprise a pair of mutually opposite pulleys 61, between which the finished multilayer tube 23 passes; such pulleys are supported by a support 62 designed to be translated to the right and to the left alternately by lead screw and worm screw means 63 of a per se known type, which are managed by an electric motor 64, as shown by way of example in Figures 4 and 5.

The means 25 for cutting into tapes 26 of preset width the Aerogel in roll form 27, shown in Figures 7 to 10, are constituted by a series of side-by-side pairs of rotating circular blades 65, 65a, 65b and so forth.

Each pair of blades, for example 65a, comprises two circular blades 66 and 67, each keyed on a corresponding driving shaft 68 and 69 of two drive shafts with parallel axes.

The blades 66 and 67 of each pair have superimposed cutting edges so that the quality of the cut is the same for all the edges of all the tapes 14 that are provided.

The blades 66 and 67 are supported by collars 68 that can be opened to reposition the blades on the respective driving shafts, so as to allow to adjust the width of the tapes 26 to be provided.

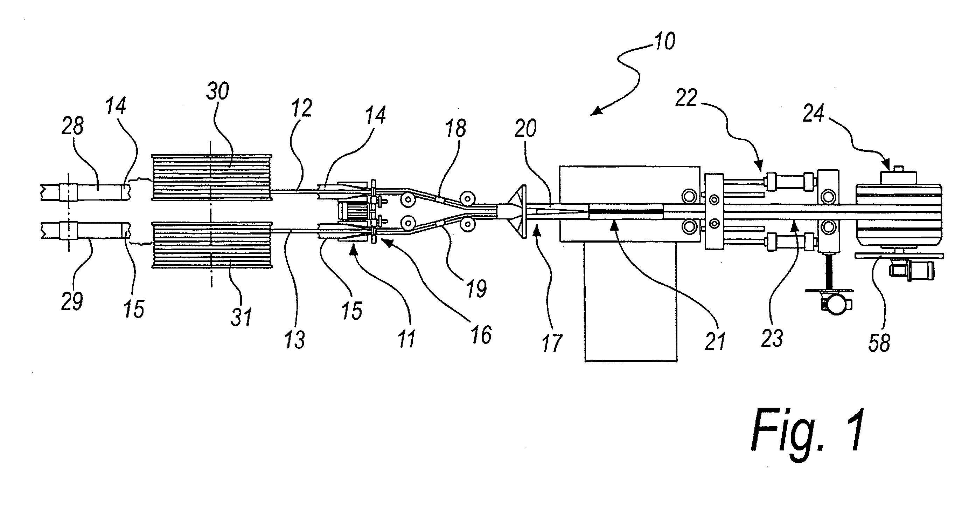

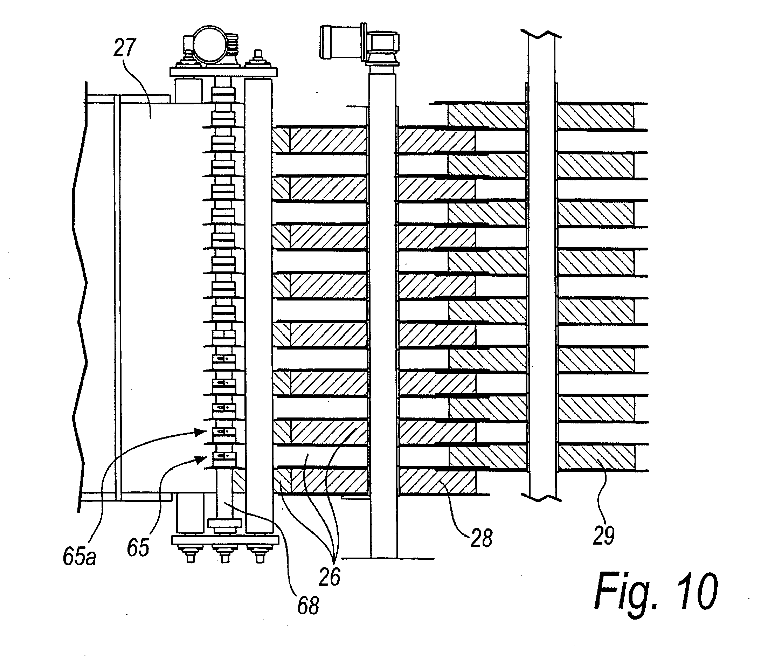

Figure 10 shows that the various tapes 26 are gathered in rolls 28 and 29, which are then arranged, as shown in Figure 1, in input to the covering means 11.

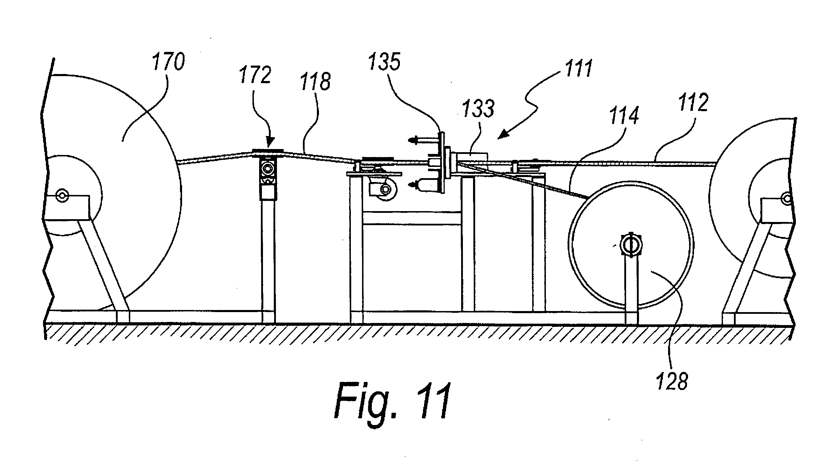

In a second embodiment of the apparatus according to the invention, the means 111 for covering two flexible tubes 112 and 113, shown schematically in Figure 11, receive a tape 114 of Aerogel from a roll 128, provided by way of the means 25 for cutting the Aerogel described above.

The means 111 process a single flexible tube 112 instead of two as in the first embodiment of the apparatus.

The means 111 for covering the tube 112 comprise a conical inlet 133 and a stranding device 135 of a per se known type and as described above.

The covered tube 118 is directed to a spool 170.

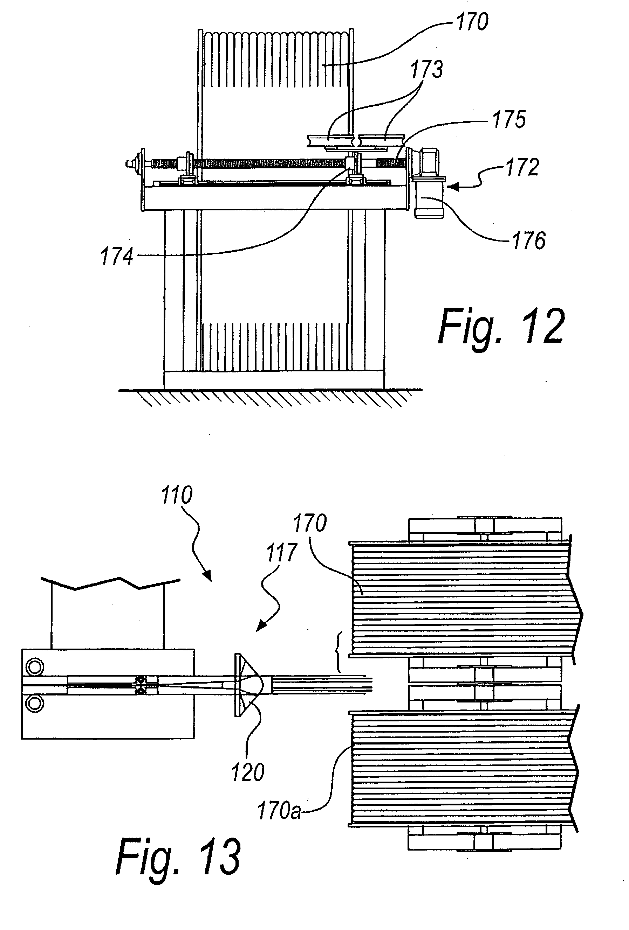

The apparatus 110 in its second embodiment, exemplified in Figure 13, has in input to the means 117 for covering with a sheath 120 two spools 170 and 170a of covered tube 118, instead of two paired covering devices 11 and tying means 35 as in the first embodiment of the apparatus.

The rest of the apparatus 110 in its second embodiment corresponds to what has been described for the first embodiment of the apparatus 10.

Advantageously, means 172 for diverting the covered tube 118 are associated with the spool 170 and are adapted to direct such tube so as to optimize the winding of the spool 170.

The diverting means 172 comprise a pair of mutually opposite pulleys 173, between which the finished multilayer tube 23 passes, such pulleys being supported by a support 174 designed to be translated to the right and to the left alternately by lead screw and worm screw means 175, of a per se known type, which are managed by an electric motor 176, as exemplified in Figure 12.

In practice it has been found that the invention achieves the intended aim and objects.

In particular, the invention provides an apparatus for manufacturing a multilayer tube for the hydraulic connection and wiring of solar panels as described in the introduction to the present description.

Further, the invention provides an apparatus that can be managed easily with a small workforce, since all the parts of the apparatus can be substantially automated, except in the second embodiment, in which a conveyance of spools of covered tube occurs.

Moreover, the invention provides an apparatus that is flexible and easily adaptable to the production requirements of the user, since it is possible to vary the type and size of the flexible tubes and the width of the tapes of Aerogel according to the requirements and needs.

Not least, the invention provides an apparatus for manufacturing a multilayer tube for the hydraulic connection and wiring of solar panels that can be manufactured with per se known technologies.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for manufacturing a multilayer tube for the hydraulic connection and wiring of solar panels, **characterized in that** it comprises
- means (11) for covering at least one flexible tube (12) with at least one tape (14) of thermally insulating material;
- means (16) for tying said tape (14) made of thermally insulating material wrapped around the corresponding flexible tube (12);
- means (17) for covering at least two flexible tubes (18, 19), which are already covered with said insulating tape and are arranged mutually side-by-side and parallel, with a protection and containment sheath (20),
- means (21) for the longitudinal closure of said sheath (20).

2. The apparatus according to claim 1, **characterized in that** it comprises means (25) for cutting into tapes (26) of preset width thermally insulating material in roll form (27).

3. The apparatus according to claim 1, **characterized in that** downstream of said means (21) for longitudinal closure of the sheath (20) there are means (22) for the advancement of the finished multilayer tube (23), which are followed by means (24) for coiling the finished multilayer tube (23).

4. The apparatus according to claim 2, **characterized in that** said material in roll form (27) is Aerogel.

5. The apparatus according to claim 1, **characterized in that** the apparatus comprises two means (11) for covering each one flexible tube (12, 13), each means (11) comprising a conical inlet (33, 34), which is contoured to receive the tape (14, 15) spread flat and to fold it during its advancement so as to wrap completely around the respective tube (12, 13).

6. The apparatus according to claim 1, **characterized in that** said tying means (16) comprise stranding means (35, 36) which are actuated by a single electric motor (39).

7. The apparatus according to claim 1, **characterized in that** said
means (17) for covering at least two flexible tubes (18, 19) comprise an inlet (40) designed to arrange a central region (20a) of the sheath in form of a tape (20) below the two covered tubes (18, 19), while lateral flaps (20b, 20c) of the sheath tape are lifted, to be then folded, by a successive passage element (42) provided with two conical channels, in order to wrap around each one of the two tubes (18, 19) until edges (20d, 20e) of the flaps are moved into contact with the upper face of the central region (20a) of said sheath, at least one electrical cable being optionally enclosed by the sheath (20), laterally to one of the two covered tubes, together with said two covered tubes (18, 19).

8. The apparatus according to claim 7, **characterized in that** said means (21) for the longitudinal closure of said sheath (20) on said covered tubes (18, 19) comprise a body (46) inside which two tubular channels (44, 45) are formed for the passage of the covered tubes (18, 19) wrapped in the sheath (20), and **in that** between said tubular channels (44, 45) there is an open channel (47), by means of which the edges (20d, 20e) of the sheath (20), which are superimposed on the central region (20a) of said sheath (20), are accessible by a heat-sealing device (50), which is designed to heat-seal the flaps (20d, 20e) to the central region (20a) of the sheath.

9. The apparatus according to claim 3, **characterized in that** said means (22) for the advancement of the finished multilayer tube (23) are of the stepwise type and comprise locking jaws (54) designed to grip the finished multilayer tube (23), to then perform a translational motion on rails (56) for the advancement of the finished multilayer tube by actuators (55).

10. The apparatus according to claim 4, **characterized in that** said means (25) for cutting into tapes (26) of preset width the Aerogel in roll form (27) comprise a series of side-by-side pairs of rotating circular blades (65, 65a, 65b), each pair of blades comprising two circular blades (66, 67), each keyed on a corresponding driving shaft (68, 69) of two motor shafts with parallel axes, said blades (66, 67) of each pair having superimposed cutting edges.

## Patentansprüche

1. Vorrichtung (10) zur Herstellung eines mehrlagigen Rohres für den hydraulischen Anschluß und die Verdrahtung von PV-Modulen, **dadurch gekennzeichnet, daß** sie umfaßt
- Mittel (11) zum Abdecken zumindest eines flexiblen Rohres (12) mit zumindest einem Band (14) eines thermisch isolierenden Materials;
- Mittel (16) zum Anknüpfen dieses Bandes (14), das aus thermisch isolierendem Material hergestellt und um das entsprechende flexible Rohr (12) herumgewickelt ist;
- Mittel (17) zum Abdecken zumindest zweier flexibler Rohre (18, 19), die bereits mit diesem isolierenden Band abgedeckt und gegenseitig Seite an Seite und parallel angeordnet sind, mit einer Ummantelung (20) zum Schutz und zur Abgrenzung;
- Mittel (21) zum longitudinalen Verschließen dieser Ummantelung (20).

2. Vorrichtung nach Anspruch 1, **dadurch gekennzeichnet, daß** sie Mittel (25) zum Schneiden von thermisch isolierendem Material in aufgerollter Form (27) zu Bändern (26) von vorbestimmter Breite umfaßt.

3. Vorrichtung nach Anspruch 1, **dadurch gekennzeichnet, daß** stromabwärts zu den Mitteln (21) zum longitudinalen Verschließen der Ummantelung (20) Mittel (22) zur Beförderung des fertigen mehrlagigen Rohres (23) vorgesehen sind, gefolgt von einem Mittel (24) zum Aufspulen des fertigen mehrlagigen Rohres (23).

4. Vorrichtung nach Anspruch 2, **dadurch gekennzeichnet, daß** das Material in aufgerollter Form (27) Aerogel ist.

5. Vorrichtung nach Anspruch 1, **dadurch gekennzeichnet, daß** die Vorrichtung zwei Mittel (11) zum Abdecken jedes flexiblen Rohres (12, 13) umfaßt, wobei jedes Mittel (11) einen konischen Einlaß (33, 34) umfaßt, der profiliert ist, um das Band (14, 15) flach ausgebreitet aufzunehmen und es während der Beförderung so zu falten, daß es vollständig um das entsprechende Rohr (12, 13) gewickelt wird.

6. Vorrichtung nach Anspruch 1, **dadurch gekennzeichnet, daß** die Anbindungsmittel (16) Aufspulmittel (35, 36) umfassen, die durch einen einzelnen elektrischen Motor (39) angetrieben werden.

7. Vorrichtung nach Anspruch 1, **dadurch gekennzeichnet, daß** die Mittel (17) zum Abdecken zumindest zweier flexibler Rohre (18, 19) einen Einlaß (40) umfassen, der gestaltet ist, um einen zentralen Bereich (20a) der Ummantelung in Form eines Bandes (20) unterhalb der beiden abgedeckten Rohre (18, 19) zu bilden, während seitliche Klappen (20b, 20c) des Ummantelungsbandes angehoben werden, um anschließend durch ein folgendes Durchlaßelement (42), das mit zwei konischen Kanälen ausgestattet ist, gefaltet zu werden, um jede der zwei Rohre (18, 19) zu umwickeln, bis Kanten (20d, 20e) der Klappen bis zum Kontakt mit der oberen Seite des zentralen Bereiches (20a) dieser Ummantelung bewegt werden, wobei zumindest ein elektrisches Kabel wahlweise durch die Ummantelung (20) seitlich zu einer der zwei bedeckten Rohre zusammen mit diesen zwei bedeckten Rohren (18, 19) eingeschlossen wird.

8. Vorrichtung nach Anspruch 7, **dadurch gekennzeichnet, daß** die Mittel (21) für den longitudinalen Einschluß dieser Ummantelung (20) auf diesen abgedeckten Rohren (18, 19) einen Körper (46) umfassen, in welchem zwei röhrenförmige Kanäle (44, 45) zum Durchlaß der abgedeckten Rohre (18, 19), die in der Ummantelung (20) eingewickelt sind, ausgebildet sind, und dadurch, daß zwischen diesen röhrenförmigen Kanälen (44, 45) ein offener Kanal (47) vorgesehen ist, durch welchen die Kanten (20d, 20e) der Ummantelung (20), die auf dem zentralen Bereich (20a) dieser Ummantelung (20) übereinandergelagert sind, für eine Heißversiegelungsvorrichtung (50) zugänglich sind, die dazu ausgelegt ist, die Klappen (20d, 20e) auf den zentralen Bereich (20a) der Ummantelung heißzusiegeln.

9. Vorrichtung nach Anspruch 3, **dadurch gekennzeichnet, daß** die Mittel (22) für die Beförderung des fertigen mehrlagigen Rohres (23) von schrittweiser Art sind und Halteklauen (54) aufweisen, die dazu ausgelegt sind, das fertige mehrlagige Rohr (23) zu greifen, um dann eine Seitwärtsbewegung auf Schienen (56) für den Vorschub des fertigen mehrlagigen Rohres durch Antriebe (55) durchzuführen.

10. Vorrichtung nach Anspruch 4, **dadurch gekennzeichnet, daß** die Mittel (25) zum Schneiden des Aerogels in aufgerollter Form (27) in Bänder (26) von vorbestimmter Breite eine Reihe von Seite an Seite angeordneten Paaren von rotierenden kreisförmigen Schneiden (65, 65a, 65b) aufweisen, wobei jedes Paar von Schneiden zwei kreisförmige Schneiden (66, 67) aufweist, wobei jedes auf einen entsprechenden Antriebsschaft (68, 69) von zwei Motorschäften mit parallelen Achsen aufgekeilt ist, wobei die Schneiden (66, 67) jedes Paares übereinandergelagerte Schneidkanten aufweisen.

## Revendications

1. Dispositif (10) pour la fabrication d'un tube multicouche pour le raccordement hydraulique et le câblage de panneaux solaires, **caractérisé en ce qu'**il comporte
- des moyens (11) pour recouvrir au moins un tube flexible (12) avec au moins un ruban (14) en matière thermiquement isolante ;
- des moyens (16) pour attacher ledit ruban (14) en matière thermiquement isolante enveloppant le tube flexible correspondant (12) ;
- des moyens (17) pour recouvrir, au moins deux tubes flexibles (18, 19), qui sont déjà recouverts avec ledit ruban isolant et sont disposés mutuellement côte à côte et parallèlement, à l'aide d'une gaine de protection et de retenue (20);
- des moyens (21) pour fermer longitudinalement ladite gaine (20).

2. Dispositif selon la revendication 1, **caractérisé en ce qu'**il comporte des moyens (25) pour découper en rubans (26) d'une largeur prédéfinie une matière thermiquement isolante en rouleau (27).

3. Dispositif selon la revendication 1, **caractérisé en ce que**, en aval dudit moyen (21) pour fermer longitudinalement la gaine (20), se trouvent des moyens (22) pour faire avancer le tube multicouche fini (23), qui sont suivis de moyens (24) pour enrouler le tube multicouche fini (23).

4. Dispositif selon la revendication 2, **caractérisé en ce que** ladite matière en rouleau (27) est de l'Aérogel.

5. Dispositif selon la revendication 1, **caractérisé en ce que** le dispositif comporte deux moyens (11) pour recouvrir chacun un tube flexible (12, 13), chaque moyen (11) comportant une entrée conique (33, 34), profilée pour recevoir le ruban (14, 15) étalé à plat et le plier pendant qu'il avance afin qu'il enveloppe entièrement le tube respectif (12, 13).

6. Dispositif selon la revendication 1, **caractérisé en ce que** lesdits moyens d'attache (16) comprennent des moyens de tressage (35, 36) actionnés par un unique moteur électrique (39).

7. Dispositif selon la revendication 1, **caractérisé en ce que** lesdits moyens (17) pour recouvrir au moins deux tubes flexibles (18, 19) comprennent une entrée (40) conçue pour placer une zone centrale (20a) de la gaine (20) en forme de ruban sous les deux tubes recouverts (18, 19), tandis que des pans latéraux (20b, 20c) du ruban de la gaine sont levés, pour être ensuite pliés, par un élément de passage successif (42) muni de deux conduits coniques, afin d'envelopper chacun des deux tubes (18, 19) jusqu'à ce que les bords (20d, 20e) des pans arrivent au contact de la face supérieure de la zone centrale (20a) de ladite gaine, au moins un câble électrique étant éventuellement englobé dans la gaine (20), latéralement par rapport à l'un des deux tubes recouverts, ainsi que lesdits deux tubes recouverts (18, 19).

8. Dispositif selon la revendication 7, **caractérisé en ce que** lesdits moyens (21) pour fermer longitudinalement ladite gaine (20) sur lesdits tubes recouverts (18, 19) comprennent un corps (46) à l'intérieur duquel deux conduits tubulaires (44, 45) sont formés pour le passage des tubes recouverts (18, 19) enveloppés dans la gaine (20), et **en ce qu'**entre lesdits conduits tubulaires (44, 45) se trouve un conduit ouvert (47), à l'aide duquel les bords (20d, 20e) de la gaine (20), qui sont superposés dans la zone centrale (20a) de ladite gaine (20), sont accessibles pour un dispositif de thermosoudage (50), conçu pour fixer les pans (20b, 20c) par thermosoudage à la zone centrale (20a) de la gaine.

9. Dispositif selon la revendication 3, **caractérisé en ce que** lesdits moyens (22) pour faire avancer le tube multicouche fini (23) sont du type pas à pas et comprennent des mors de serrage (54) conçus pour tenir fermement le tube multicouche fini (23), pour ensuite exécuter un mouvement de translation sur des rails (56) afin que le tube multicouche fini avance sous l'effet d'actionneurs (55).

10. Dispositif selon la revendication 4, **caractérisé en ce que** lesdits moyens (25) pour découper en rubans (26) d'une largeur prédéfinie l'Aérogel en rouleau (27) comprennent une série de paires juxtaposées de lames circulaires rotatives (65, 65a, 65b), chaque paire de lames comprenant deux lames circulaires (66, 67), clavetées chacune sur un arbre d'entraînement correspondant (68, 69) de deux arbres de moteurs à axes parallèles, lesdites lames (66, 67) de chaque paire ayant des tranchants superposés.
